# EUROPEAN PATENT SPECIFICATION

(11) **EP 3 032 858 B1**
(45) Date of publication and mention of the grant of the patent: **04.03.2020**
(21) Application number: 14197825.4
(22) Date of filing: 12.12.2014
(51) Int. Cl.: H04W 12/04, H04R 25/00, H04W 84/18, H04L 9/08, H04L 29/06, H04L 9/14

(54) **Apparatus for secure hearing device communication and related method**
Vorrichtung zur sicheren Hörgerätekommunikation und zugehöriges Verfahren
Appareil de communication de dispositif auditif sécurisé et procédé associé

(43) Date of publication of application: 15.06.2016
(73) Proprietor: GN Hearing A/S, 2750 Ballerup (DK)
(72) Inventor: PEDERSEN, Brian Dam, DK-2750 Ballerup (DK); VENDELBO, Allan Munk, DK-2750 Ballerup (DK)
(74) Representative: Aera A/S

(56) References cited:
- US-A1- 2008 020 707
- US-A1- 2011 126 014
- US-A1- 2012 140 962
- US-B1- 8 745 394
- US-B1- 8 904 195

## Description

The present disclosure relates to hearing device communication, in particular to apparatus and/or device for securing hearing device communication and method for hearing device communication.

### BACKGROUND

The functionality of a hearing device becomes increasingly advanced. Hearing device communication comprises wireless communication between a hearing device and external devices, such as hearing device fitting apparatus, tablets, smart phones and remote controllers, which increases in complexity. A wireless communication interface of a hearing device uses open standard-based interface which is convenient for communication with a hearing device, for various purposes such as fitting the hearing device on an individual's ear. However, hearing device communication is exposed to many challenges in terms of security. A device communicating with a hearing device may be a legitimate device but may also be a rogue device. If communication with a hearing device does not permit to distinguish legitimate devices from rogue devices, this opens the door to a plethora of attacks, such as unauthorized access to the hearing device memory to write or change data. Any such attacks may result in a malfunction of the hearing aid, e.g. a battery exhaustion attack.

However, a hearing device is a very small device with strict constraints in terms of computational power, memory space, etc. Therefore, a device communicating with a hearing device cannot use an off-the-shelf security algorithm and protocol, at the risk of e.g. depleting the hearing device battery or degrading functions of the hearing device rendering the hearing device quasi-useless.

### SUMMARY

There is a need for an improved communication with a hearing device that protects the hearing device against potential attacks, such as an improved client device, and a method of communication with a hearing device that improves security thereof. Disclosed is a client device for hearing device communication. The client device comprises a processing unit, a memory unit, and an interface. The processing unit is configured to send a session request for a session to the hearing device via the interface. The processing unit is configured to receive a session response from the hearing device via the interface. The processing unit is configured to obtain a session key based on e.g. the session response. The processing unit is optionally configured to determine hearing device data and/or to obtain or generate session data e.g. based on the session key and the hearing device data. The processing unit is configured to send the session data to the hearing device via the interface.

Also disclosed is a method, performed in a client device, for hearing device communication, e.g. communication with a hearing device. The client comprises a processing unit, a memory unit and an interface. The method comprises sending a session request for a session to the hearing device via the interface. The method comprises receiving a session response via the interface and/or obtaining a session key based on e.g. the session response. The method comprises determining hearing device data and/or generating session data based on the session key and the hearing device data. The method comprises sending the session data to the hearing device via the interface.

The method and apparatus as disclosed provide a secure communication from the client device to the hearing device, such as provide to the client device a secure and/or authorized access to the memory of the hearing device. It is an advantage of the present disclosure that the communication between the client device and the hearing device is protected against any action or at least some actions from undesired parties. The disclosed client device thus has the advantage of allowing the hearing device to detect any modification by unauthorized parties. The client device provides a secure communication adapted to the hearing device, which in turn is able to communicate securely with legitimate parties such as the client device and to counterstrike attacks such as spoofing attacks, man-in-the-middle attacks, and/or replay-attacks.

### BRIEF DESCRIPTION OF THE DRAWINGS

The above and other features and advantages will become readily apparent to those skilled in the art by the following detailed description of exemplary embodiments thereof with reference to the attached drawings, in which:
- Fig. 1: schematically illustrates an exemplary architecture according to this disclosure,
- Fig. 2: schematically illustrates an exemplary hearing device,
- Fig. 3: schematically illustrates an exemplary signalling diagram, and
- Fig. 4: schematically illustrates a flowchart of an exemplary method.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

It is an object of the present disclosure to provide a client device, and a method which seeks to mitigate, alleviate, or eliminate one or more of the above-identified deficiencies in the art and disadvantages singly or in any combination.

The present disclosure provides improved security of communication performed between the client device and a hearing device. Security comprises assessing threats, vulnerabilities and attacks and developing appropriate safeguards and countermeasures to protect against threats and attacks. The present disclosure provides a hearing device comprising a processing unit configured to compensate for hearing loss of a user of the hearing device.

The term "client device" as used herein refers to a device that communicates with the hearing device. The client device may refer to a computing device acting as a client. The client device may comprise a fitting device, a handheld device, a relay, a tablet, a personal computer, a mobile phone, and/or USB dongle plugged into a personal computer. The client device may control operation of the hearing device, either by sending fitting data, hearing device operating parameters, and/or firmware data. The disclosed client device and method support the hearing device in combatting attacks such as unauthorized access or control of a hearing device, while still allowing access to legitimate parties such as the client device, for e.g. fitting purposes, update purposes, maintenance purposes.

As used herein, the term "hearing device" refers to a device configured to assist a user in hearing a sound, such as a hearing instrument, or a hearing aid device,.

The client device comprises a memory unit and an interface respectively connected to the processing unit. The interface may comprise a wireless transceiver, e.g. configured for wireless communication at frequencies in the range from 2.4 to 2.5 GHz. In an embodiment, the interface is configured for communication, such as wireless communication, with a hearing aid comprising a wireless transceiver.

The processing unit is configured to send a session request for a session to the hearing device via the interface. The processing unit is configured to receive a session response from the hearing device via the interface, e.g. from a hearing device and/or a session key device. The session response may comprise the hearing device identifier or an identifier derived therefrom. In an exemplary client device, the client device may receive the hearing device identifier during a pairing of the client device and the hearing device. Hence, the processing unit comprises e.g. a receive/send unit configured to send data such as the session request and/or receive data such as the session response via the interface. The processing unit is configured to obtain a session key based on e.g. the session response, such as to extract the session key from or based on the session response. Hence, the processing unit comprises an obtainer. The processing unit may retrieve the session key from a key depository, e.g. stored in the memory unit. The processing unit may be configured to obtain a session key, wherein to obtain a session key may comprise to establish a connection to a session key device via the interface. The processing unit may send a session key request to the session key device such as a session key server via the interface e.g. via a communication link established between the client device and the session key device via the interface. The processing unit may receive a session key response from the session key device via the interface, and may determine the session key based on the session key response.

The session response may comprise a hearing device identifier. The hearing device identifier may comprise a hardware number of the hearing device and/or a serial number of the hearing device. The client device may retrieve the session key from the session key device by providing the hearing device identifier to the session key device, e.g. as part of the session key request, and requesting the session key or a hearing device key from the session key device and/or requesting the session key device to decrypt the session response and/or the session key.

In one or more exemplary client devices, the processing unit configured to obtain the session key may be configured to establish a connection to a session key device via the interface, to send a session key request to the session key device via the interface, to receive a session key response from the session key device via the interface, and to determine the session key based on the session key response. The session key request may comprise the hearing device identifier. The connection to the session key device may be a secure connection over a network, such as including a private and/or a public network.

The session key device may be a fitting accessory device; wherein the fitting accessory device optionally comprises a storage device containing a list configured to provide a session key and/or a session key response based on a session key request.

The processing unit is configured to determine hearing device data. Hence the processing comprises e.g. a determiner. The hearing device data comprises e.g. firmware, fitting data, and/or hearing device operating parameters. Fitting data may for example be data generated by a fitting device used by a dispenser when a hearing device is being fitted in a user's ear. Fitting data may comprise hearing loss parameters, compressor parameters, filter coefficients, and/or gain coefficients. Hearing device operation parameters may comprise volume control parameters, mode and/or program control parameters. Firmware may refer to a computer program provided by the hearing device manufacturer, and to be installed on the hearing device to control the hearing device. Firmware is for example to be installed to upgrade the operations and capabilities of the hearing device.

The session response may comprise an encrypted session key. The processing unit may be configured to determine the session key by retrieving the session key from the session key response.

In one or more exemplary client device, to determine the session key comprises retrieving a hearing device key from the session key response or from the memory unit and decrypting the encrypted session key based on the hearing device key. To determine the session key may comprise decrypting the encrypted session key with a global key. A global is e.g. a key common to a group of client devices. The processing unit may be configured to retrieve a hearing device key from the session key response and decrypt the encrypted session key based on the hearing device key. The processing unit may comprise a decrypt/encrypt unit. The hearing device key may be e.g. a symmetric key or a public key of a private-public key pair. The hearing device key may comprise an AES-128 bits key as a symmetric key. The use of a symmetric key as a hearing device key provides the advantage of being able to use hardware accelerators. The hearing device key may comprise a public key of a private-public key pair, such as a public key of a private-public key pair of an authorized discloser of the session key, such as of the client device or the session key device.

The processing unit configured to determine the session key by including a decryption of the encrypted session key with a global key, i.e. to determine the session key may comprise decrypting the encrypted session key with a global key. The global key may be e.g. a symmetric key or a public key of a private-public key pair. The session key may be compliant with an encryption standard such as Advanced Encryption Standard, AES, RSA crypto-system, Triple Data Encryption Algorithm.

The processing unit is configured to generate session data, e.g. including a message authentication code, based on the session key and the hearing device data. Hence the processing unit may comprise a generator. The processing unit may generate a message authentication code based on the session key and the hearing device data. The message authentication code may be included in the session data. The processing unit may be configured to generate session data based on a hearing device key.
The processing unit may be configured to digitally sign the hearing device data, such as to digitally sign the hearing device data using a private key of the client device, and/or of a group of client devices. The processing unit may be configured to digitally sign the hearing device data using a private key obtained from the session key device, e.g. as part of a session key response. The processing unit may generate a digital signature using a signature generation function and a private key of a client device and append the digital signature to the session data. The hearing device may then verify the digital signature when receiving the session data. If the digital signature is not successfully verified using the alleged public key of a client device, the hearing device may disregard the session data and/or terminate the session. This may provide the advantage that the client device supports the hearing device in rejecting session data tampered or received from unauthenticated parties and the communication with the hearing device may thus be robust against impersonation and masquerading attacks.

The processing unit is configured to send the session data to the hearing device via the interface, e.g. using the receive/send unit. The session data may comprise hearing device data encrypted with the session key. To encrypt session data with the session key, the client device may utilize any of the above encryption standards.

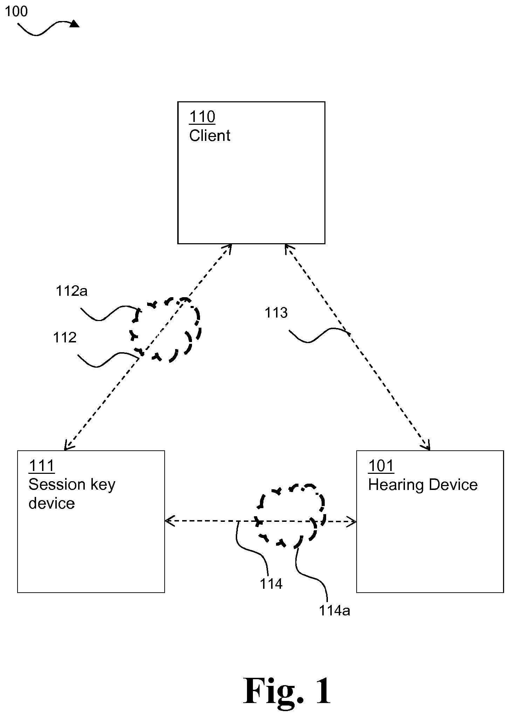

Fig. 1 schematically illustrates an exemplary architecture 100 according to this disclosure. The architecture 100 comprises a hearing device 101, a client device 110, and a session key device 111. The session key device 111 may comprise a computing device having access to a key depository. The session key device may comprise a fitting accessory device, e.g. comprising a storage device containing a list that is configured to provide a session key and/or a session key response based on a session key request. The session key device 111 may be connected to the client device 110 via communication link 112 over a network 112a. The session key device may be a computer-server. The computer-server may comprise a storage device containing a list configured to provide a session key, a hearing device key and/or a session key response based on a session key request. The session key device 111 may be a tablet, a USB dongle plugged in a personal computer. The session key device 111 may comprise a computing device configured to act as a server, i.e. to serve requests from the client device 110 and/or from the hearing device 101. The session key device 111 may be controlled by the hearing device manufacturer.

The hearing device 101 may be connected to the client device 110 via a communication link 113, such as a bidirectional communication link and/or a wireless communication link. The wireless communication link may be carried over a short-range communication system, such as Bluetooth, Bluetooth low energy, IEEE 802.11, Zigbee. The hearing device 101 may be connected to the client device 110 over a network. The client device 110 may permit remote fitting of the hearing aid device where a dispenser connects to the hearing device via the client device 110 of the user. The client device 110 may have a secure connection to the hearing device, e. g. authenticated connection.

The hearing device 101 may be connected to the session key device 111 via a communication link 114 over a network 114a, such as a bidirectional and/or wireless communication link over a network. The client device 110 may be connected to the session key device 111 via a communication link 112 over a network 112a, such as a bidirectional and/or wireless communication link over a network.

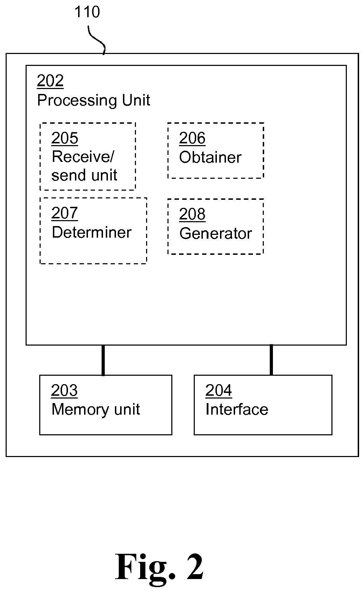

Fig. 2 schematically illustrates an exemplary client device 110. The exemplary client device 110 comprises a processing unit 202 configured communicate with a hearing device 101. The exemplary client device 110 comprises a memory unit 203 and an interface 204 respectively connected to the processing unit 202. The processing unit 202 is configured to send a session request for a session to the hearing device via the interface. The session request may comprise the hearing device identifier or an identifier derived therefrom. The processing unit 202 is configured to receive a session response via the interface, e.g. from a hearing device 101 and/or a session key device 111. Hence, the processing unit 202 comprises e.g. a receive/send unit 205 configured to send and/or receive via the interface 204. The processing unit 202 is configured to obtain a session key based on e.g. the session response, such as to extract the session key from the session response. Hence, the processing unit 202 comprises an obtainer 206. The processing unit 202 may retrieve the session key from a key depository, e.g. stored in the memory unit 203. To obtain a session key may comprise to establish a connection to a session key device 111 via the interface 204, i.e. the processing unit 202 may be configured to establish a connection to a session key device via the interface. The processing unit 202 may send a session key request, e.g. comprising a hearing device identifier, to the session key device via the interface 204. The processing unit 202 may receive a session key response from the session key device 111 via the interface 204, the session key response optionally comprising a hearing aid key. The processing unit 202 may determine the session key based on the session key response, e.g. by decrypting the encrypted session key with the hearing device key from the session key device.

The session response may comprise a hearing device identifier. The hearing device identifier may comprise a hardware number of the hearing device and/or a serial number of the hearing device. The client device 110 may retrieve the session key from the session key device 111 by providing the hearing device identifier to the session key device 111 and requesting the session key from the session key device 111 and/or requesting the session key device 111 to decrypt the session response and/or the session key.

In one or more exemplary client devices, to obtain the session may comprise to establish a connection to a session key device via the interface, to send a session key request to the session key device via the interface, to receive a session key response from the session key device via the interface, and to determine the session key based on the session key response. The connection establishment may be a secure connection establishment e.g. using a secure protocol to a server acting as session key device.

The processing unit 202 is configured to determine hearing device data. Hence the processing comprises e.g. a determiner. The hearing device data comprises e.g. firmware, fitting data, and/or hearing device operating parameters. Thus, the client device 110 may be a fitting device. Fitting data may for example be data generated by a fitting device used by a dispenser when a hearing device is being fitted in a user's ear. Fitting data may comprise hearing loss parameters, compressor parameters, filter coefficients, and/or gain coefficients. Hearing device operation parameters may comprise volume control parameters, mode and/or program control parameters. Firmware may refer to a computer program provided by the hearing device manufacturer, and to be installed on the hearing device to control the hearing device. Firmware is for example to be installed to upgrade the operations and capabilities of the hearing device.

In an embodiment, the client device may be in the form of a smart phone or a table may comprise software configured to provide the functionality of a fitting device.

The session response may comprise an encrypted session key. The processing unit 202 may be configured to determine the session key by retrieving the session key from the session key response

In one or more exemplary client devices, to determine the session key comprises retrieving a hearing device key from the session key response and decrypting the encrypted session key based on the hearing device key. Alternatively to determine the session key may comprise decrypting the encrypted session key with a global key. A global is e.g. a key common to a group of client devices. The processing unit 202 is configured to e.g. retrieve a hearing device key from the session key response and decrypt the encrypted session key based on the hearing device key. The processing unit may comprise a decrypt/encrypt unit. The hearing device key may be e.g. a symmetric key or a public key of a private-public key pair. The hearing device key may comprise an AES-128 bits key as a symmetric key. The use of a symmetric as a hearing device key provides the advantage of being able to use hardware accelerators. The hearing device key may comprise a public key of a private-public key pair, such as a public key of a private-public key pair of an authorized discloser of the session key, such as of the client device 110 or the session key device 111.

In one or more exemplary client devices, to determine the session key comprises decrypting the encrypted session key with a global key. The global key may be e.g. a symmetric key or a public key of a private-public key pair. The session key may be compliant with or encrypted with an encryption standard such as Advanced Encryption Standard, AES, RSA crypto-system, Triple Data Encryption Algorithm.

The processing unit 202 is configured to generate session data e.g. based on the session key and the hearing device data. Hence the processing comprises e.g. a generator 208. The processing unit 202 may generate a message authentication code based on the session key and the hearing device data. A message authentication code, MAC, is generated by a client device 110 based on the session data and the session key. Upon reception of the session data comprising the MAC, the hearing device which holds the stored session key is able to re-compute the MAC based on the received session data and a MAC generation function and compare the recomputed MAC with the received MAC. If the recomputed MAC does not match the received MAC, then the hearing device concludes that session data is corrupted.
The processing unit 202 to generate session data may be configured to encrypt the hearing device data with the session, using e.g. an encryption scheme. The encryption scheme may comprise a symmetric encryption scheme and/or an asymmetric encryption scheme. The session key may comprise a symmetric key. The symmetric key may be uniquely generated for each session by the hearing device and/or session key device. The symmetric key may comprise an AES-128 bits key. The use of a symmetric key as a session key may reduce a processing power requirement, and allow the hearing device 101 to decrypt the session data with light encryption algorithms.

The processing unit 202 may be configured to digitally sign the hearing device data, such as to digitally sign the hearing device data using a private key of the client device, and/or of a group of client devices. The processing unit 202 generates a digital signature using a signature generation function and a private key of a client device 110 and append it to the session data. The hearing device 101 may then verify the digital signature when receiving the session data. If the digital signature is not successfully verified using the alleged public key of a client device 110, the hearing device 101 may disregard the session data and terminates the session. This may provide the advantage that the client device 110 supports the hearing device 101 in rejecting session data tampered or received from unauthenticated parties and the communication with the hearing device may thus be robust against impersonation and masquerading attacks.

The processing unit 202 is configured to send the session data to the hearing device via the interface, e.g. using the receive/send unit 205. The session data may comprise hearing device data encrypted with the session key. To encrypt session data with the session key, the client device 110 may utilize any of the above encryption standards.

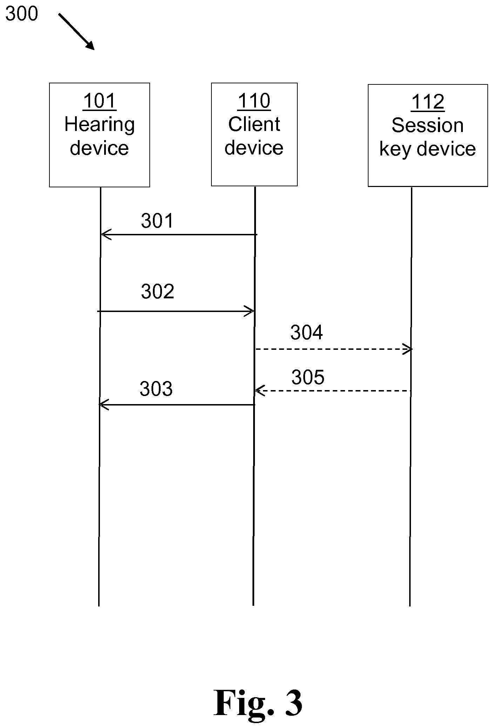

Fig. 3 shows an exemplary signalling diagram 300 involving a session key device 111. A client device 110 sends to e.g. the hearing device 101 a session request 301 for a session via the interface 204. The client device 110 receives from e.g. hearing device 101 a session response 302. The session response 302 may comprise an encrypted session key. The client device 110 obtains the session key. For example, to obtain session key, the client device 110 may send a session key request 304 to the session key device 111, whereupon the session key device decrypts the encrypted session key comprised in the session response 302. Based on the session key request 304, the session key device 111 may send the decrypted session key or a hearing device key enabling the client device to decrypt the encrypted session key in a session key response 305 to the client device 110. The session key response 305 from the server device 111 may comprise the decrypted session key. The communication link 112 between the client device 110 and the session key device 111 is secure. For example, the session key device 111 may be physically attached as a USB dongle to the client device 111. Alternatively the session key device 111 may be connected to the client device via a network. The communication link 112 between the client device 110 and the session key device 111 may be secure, i.e. authenticated, encrypted and/or integrity protected using a security protocol (e.g. Transport Layer Security protocol). The client device 110 determines hearing device data and generates session data 303 based on the session key and the hearing device data. For example the client device 110 encrypts the hearing device data with the session key. The session data 303 may be integrity-protected by the client device 110. The client device 110 sends the session data 303 in the session via the interface 204.

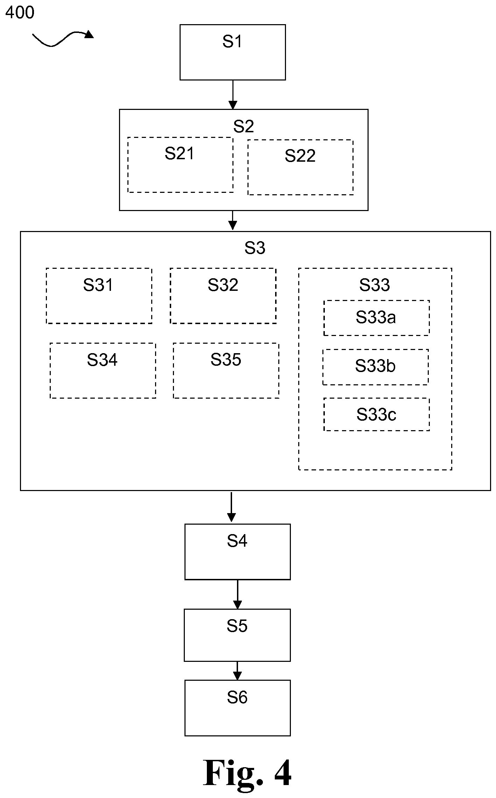

Fig. 4 shows an exemplary flow-chart illustrating a method, performed in a client device 110, for hearing device communication. The client device 110 comprises a processing unit 202, a memory unit 203 and an interface 204. The method comprises sending S1 a session request for a session to the hearing device 101 via the interface 204, e.g. to a hearing device 101 and/or a session key device 111. The method comprises receiving S2 a session response via the interface 204, from a hearing device 101 and/or a session key device 111.

The method comprises obtaining S3 a session key based on the session response, such as to extract the session key from the session response. Obtaining S3 a session key may comprise establishing S31 a connection to a session key device 111, sending S32 a session key request to the session key device 111, receiving S33 a session key response from the session key device 111, and determining S34 the session key based on the session key response. The client device 110 may retrieve the session key from the session key device 111 by providing the hearing device identifier to the session key device 111 and requesting the session key from the session key device 111 and/or requesting the session key device 111 to decrypt the session response and/or the session key.

In one or more methods, receiving S2 a session response may comprise receiving S21 an encrypted session key. Determining S33 the session key may comprise retrieving S33a the session key from the session key response. Determining S33 the session key may comprises retrieving S33b a hearing device key from the session key response and decrypting S33c the encrypted session key based on the hearing device key.

In one or more methods, receiving S2 a session response may comprise receiving S21 an encrypted session key. Obtaining S3 a session key based on the session response may comprise decrypting S35 the encrypted session key with a global key. The global key may be stored in the client device 110, such as in the memory 203.

The method comprises determining S4 hearing device data. The method comprises generating S5 session data based on the session key and the hearing device data. The method comprises sending S6 the session data to the hearing device via the interface.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives and modifications.

### LIST OF REFERENCES

- 100: architecture
- 101: hearing device
- 111: session key device
- 112: communication link between client device and session key device
- 112a: communication network
- 113: communication link between client device and hearing device
- 114: communication link between session key device and hearing device
- 114a: communication network
- 202: processing unit
- 203: memory unit
- 204: interface
- 205: receive/send unit
- 206: obtainer
- 207: determiner
- 208: generator
- 300: signalling diagram
- 301: session request
- 302: session response
- 303: session data
- 304: session key request
- 305: session key response
- 400: method

## Claims

1. A client device (110) for hearing device communication, the client device (110) comprising
- a processing unit (202);
- a memory unit (203); and
- an interface (204),
wherein the processing unit (202) is configured to:
- send a session request (301) for a session to the hearing device via the interface (204);
- receive a session response (302) from the hearing device via the interface (204), the session response (302) comprising a hearing device identifier;
- obtain a session key based on the session response (302), wherein to obtain a session key comprises to establish a connection to a session key device (111) via the interface (204), to send a session key request (304) to the session key device (110) via the interface (204), the session key request (304) comprising the hearing device identifier, to receive a session key response (305) from the session key device (110) via the interface (204), and to determine the session key based on the session key response (305);
- determine hearing device data;
- generate session data (303) based on the session key and the hearing device data; and
- send the session data (303) to the hearing device via the interface (204).

2. Client device according to claim 1, wherein the connection to the session key device (111) is a secure connection over a network.

3. Client device according to any of claims 1-2, wherein the session key device (111) is a fitting accessory device; wherein the fitting accessory comprises a storage device containing a list configured to provide a session key and/or a session key response (305) based on a session key request (304).

4. Client device according to any of claims 1-3, wherein the session key device (111) is a computer-server; wherein the computer-server comprises a storage device containing a list configured to provide a session key and/or a session key response (305) based on a session key request (304).

5. Client device according to any of claims 1-4, wherein the session response (302) comprises an encrypted session key, and wherein to determine the session key comprises retrieving the session key from the session key response (305).

6. Client device according to claim 5, wherein to determine the session key comprises retrieving a hearing device key from the session key response (305) and decrypting the encrypted session key based on the hearing device key; or wherein to determine the session key comprises decrypting the encrypted session key with a global key.

7. Client device according to any of the preceding claims, wherein to generate session data (303) based on the session key and the hearing device data comprises generating a message authentication code based on the session key and the hearing device data.

8. Client device according to any of the preceding claims, wherein to generate session data based on the session key and the hearing device data comprises digitally signing the hearing device data.

9. Client device according to any of the preceding claims wherein the hearing device data comprises firmware, fitting data, and/or hearing device operating parameters.

10. A method, performed in a client device (110), for hearing device communication, the client device (110) comprising a processing unit (202), a memory unit (203) and an interface (204), the method comprising:
- sending a session request (301) for a session to the hearing device via the interface (204);
- receiving a session response (302) via the interface (204);
- obtaining a session key based on the session response (302), wherein obtaining a session key comprises establishing a connection to a session key device (111), sending a session key request (304) to the session key device (111), receiving a session key response (305) from the session key device (111), and determining the session key based on the session key response (305);
- determining hearing device data;
- generating session data (303) based on the session key and the hearing device data; and
- sending the session data (303) to the hearing device via the interface (204).

11. Method according to claim 10, wherein receiving a session response (302) comprises receiving an encrypted session key, and wherein determining the session key comprises retrieving the session key from the session key response (302)

12. Method according to any of claims 10-11, wherein determining the session key comprises retrieving a hearing device key from the session key response (305) and decrypting the encrypted session key based on the hearing device key.

13. Method according to any of claims 10-12, wherein receiving a session response (302) comprises receiving an encrypted session key, and obtaining a session key based on the session response (302) comprises decrypting the encrypted session key with a global key.

## Patentansprüche

1. Client-Gerät (110) für die Hörgerätekommunikation, wobei das Client-Gerät (110) Folgendes umfasst:
- eine Verarbeitungseinheit (202);
- eine Speichereinheit (203); und
- eine Schnittstelle (204),
wobei die Verarbeitungseinheit (202) dazu konfiguriert ist, um:
- über die Schnittstelle (204) eine Sitzungsanfrage (301) für eine Sitzung an das Hörgerät zu senden;
- über die Schnittstelle (204) eine Sitzungsantwort (302) von dem Hörgerät zu empfangen, wobei die Sitzungsantwort (302) eine Hörgerätekennung umfasst;
- einen Sitzungsschlüssel auf Grundlage der Sitzungsantwort (302) zu erhalten, wobei das Erhalten eines Sitzungsschlüssels das Herstellen einer Verbindung zu einem Sitzungsschlüsselgerät (111) über die Schnittstelle (204), das Senden einer Sitzungsschlüsselanfrage (304) an das Sitzungsschlüsselgerät (110) über die Schnittstelle (204), wobei die Sitzungsschlüsselanfrage (304) die Hörgerätekennung umfasst, das Empfangen einer Sitzungsschlüsselantwort (305) von dem Sitzungsschlüsselgerät (110) über die Schnittstelle (204) und das Bestimmen des Sitzungsschlüssels auf Grundlage der Sitzungsschlüsselantwort (305) umfasst;
- Hörgerätedaten zu bestimmen;
- Sitzungsdaten (303) auf Grundlage des Sitzungsschlüssels und der Hörgerätedaten zu erzeugen; und
- die Sitzungsdaten (303) über die Schnittstelle (204) an das Hörgerät zu senden.

2. Clientgerät nach Anspruch 1, wobei die Verbindung zu dem Sitzungsschlüsselgerät (111) eine sichere Verbindung über ein Netzwerk ist.

3. Clientgerät nach einem der Ansprüche 1 bis 2, wobei das Sitzungsschlüsselgerät (111) ein Anpassungszubehörgerät ist; wobei das Anpassungszubehör eine Speichereinheit umfasst, die eine Liste beinhaltet, die dazu konfiguriert ist, einen Sitzungsschlüssel und/oder eine Sitzungsschlüsselantwort (305) auf Grundlage einer Sitzungsschlüsselanfrage (304) bereitzustellen.

4. Clientgerät nach einem der Ansprüche 1 bis 3, wobei das Sitzungsschlüsselgerät (111) ein Computerserver ist; wobei der Computerserver eine Speichereinheit umfasst, die eine Liste beinhaltet, die dazu konfiguriert ist, einen Sitzungsschlüssel und/oder eine Sitzungsschlüsselantwort (305) auf Grundlage einer Sitzungsschlüsselanfrage (304) bereitzustellen.

5. Clientgerät nach einem der Ansprüche 1 bis 4, wobei die Sitzungsantwort (302) einen verschlüsselten Sitzungsschlüssel umfasst, und wobei das Bestimmen des Sitzungsschlüssels das Abrufen des Sitzungsschlüssels von der Sitzungsschlüsselantwort (305) umfasst.

6. Clientgerät nach Anspruch 5, wobei das Bestimmen des Sitzungsschlüssels das Abrufen eines Hörgeräteschlüssels von der Sitzungsschlüsselantwort (305) und das Entschlüsseln des verschlüsselten Sitzungsschlüssels auf Grundlage des Hörgeräteschlüssels umfasst; oder wobei das Bestimmen des Sitzungsschlüssels das Entschlüsseln des verschlüsselten Sitzungsschlüssels mit einem globalen Schlüssel umfasst.

7. Clientgerät nach einem der vorhergehenden Ansprüche, wobei das Erzeugen der Sitzungsdaten (303) auf Grundlage des Sitzungsschlüssels und der Hörgerätedaten das Erzeugen eines Nachrichtenauthentifizierungscodes auf Grundlage des Sitzungsschlüssels und der Hörgerätedaten umfasst.

8. Clientgerät nach einem der vorhergehenden Ansprüche, wobei das Erzeugen der Sitzungsdaten auf Grundlage des Sitzungsschlüssels und der Hörgerätedaten das digitale Signieren der Hörgerätedaten umfasst.

9. Clientgerät nach einem der vorhergehenden Ansprüche, wobei die Hörgerätedaten Firmware, Anpassungsdaten, und/oder Hörgerätebetriebsparameter umfassen.

10. Verfahren für die Hörgerätekommunikation, die in einem Clientgerät (110) ausgeführt wird, wobei das Clientgerät (110) eine Verarbeitungseinheit (202), eine Speichereinheit (203) und eine Schnittstelle (204) umfasst, wobei das Verfahren Folgendes umfasst:
- Senden einer Sitzungsanfrage (301) für eine Sitzung über die Schnittstelle (204) an das Hörgerät;
- Empfangen einer Sitzungsantwort (302) über die Schnittstelle (204);
- Erhalten eines Sitzungsschlüssels auf Grundlage der Sitzungsantwort (302), wobei das Erhalten eines Sitzungsschlüssels das Herstellen einer Verbindung zu einem Sitzungsschlüsselgerät (111), das Senden einer Sitzungsschlüsselanfrage (304) an das Sitzungsschlüsselgerät (111), das Empfangen einer Sitzungsschlüsselantwort (305) von dem Sitzungsschlüsselgerät (111) und das Bestimmen des Sitzungsschlüssels auf Grundlage der Sitzungsschlüsselantwort (305) umfasst;
- Bestimmen von Hörgerätedaten;
- Erzeugen von Sitzungsdaten (303) auf Grundlage des Sitzungsschlüssels und der Hörgerätedaten; und
- Senden von Sitzungsdaten (303) über die Schnittstelle (204) an das Hörgerät.

11. Verfahren nach Anspruch 10, wobei das Empfangen einer Sitzungsantwort (302) das Empfangen eines verschlüsselten Sitzungsschlüssels umfasst und wobei das Bestimmen der Sitzungsantwort das Abrufen des Sitzungsschlüssels von der Sitzungsschlüsselantwort (302) umfasst.

12. Verfahren nach einem der Ansprüche 10 bis 11, wobei das Bestimmen des Sitzungsschlüssels das Abrufen eines Hörgeräteschlüssels von der Sitzungsschlüsselantwort (305) und das Entschlüsseln des verschlüsselten Sitzungsschlüssels auf Grundlage des Hörgeräteschlüssels umfasst.

13. Verfahren nach einem der Ansprüche 10 bis 12, wobei das Empfangen einer Sitzungsantwort (302) das Empfangen eines verschlüsselten Sitzungsschlüssels umfasst und wobei das Erhalten eines Sitzungsschlüssels auf Grundlage der Sitzungsantwort (302) das Entschlüsseln des verschlüsselten Sitzungsschlüssels mit einem globalen Schlüssel umfasst.

## Revendications

1. Dispositif client (110) de communication de dispositif auditif, le dispositif client (110) comprenant
- une unité de traitement (202) ;
- une unité de mémoire (203) ; et
- une interface (204),
dans lequel l'unité de traitement (202) est configurée pour :
- envoyer une demande de session (301) pour une session au dispositif auditif par l'intermédiaire de l'interface (204) ;
- recevoir une réponse de session (302) du dispositif auditif par l'intermédiaire de l'interface (204), la réponse de session (302) comprenant un identifiant de dispositif auditif ;
- obtenir une clé de session sur la base de la réponse de session (302), dans lequel l'obtention d'une clé de session comprend l'établissement d'une connexion à un dispositif de clé de session (111) par l'intermédiaire de l'interface (204), l'envoi d'une demande de clé de session (304) au dispositif de clé de session (110) par l'intermédiaire de l'interface (204), la demande de clé de session (304) comprenant l'identifiant de dispositif auditif, la réception d'une réponse de clé de session (305) du dispositif de clé de session (110) par l'intermédiaire de l'interface (204), et la détermination de la clé de session sur la base de la réponse de clé de session (305) ;
- déterminer des données de dispositif auditif ;
- générer des données de session (303) sur la base de la clé de session et des données de dispositif auditif ; et
- envoyer les données de session (303) au dispositif auditif par l'intermédiaire de l'interface (204).

2. Dispositif client selon la revendication 1, dans lequel la connexion au dispositif de clé de session (111) est une connexion sécurisée sur un réseau.

3. Dispositif client selon l'une quelconque des revendications 1 à 2, dans lequel le dispositif de clé de session (111) est un dispositif accessoire de réglage ; dans lequel l'accessoire de réglage comprend un dispositif de stockage contenant une liste configurée pour fournir une clé de session et/ou une réponse de clé de session (305) sur la base d'une demande de clé de session (304) .

4. Dispositif client selon l'une quelconque des revendications 1 à 3, dans lequel le dispositif de clé de session (111) est un serveur informatique ; dans lequel le serveur informatique comprend un dispositif de stockage contenant une liste configurée pour fournir une clé de session et/ou une réponse de clé de session (305) sur la base d'une demande de clé de session (304).

5. Dispositif client selon l'une quelconque des revendications 1 à 4, dans lequel la réponse de session (302) comprend une clé de session cryptée, et dans lequel la détermination de la clé de session comprend la récupération de la clé de session à partir de la réponse de clé de session (305).

6. Dispositif client selon la revendication 5, dans lequel la détermination de la clé de session comprend la récupération d'une clé de dispositif auditif à partir de la réponse de clé de session (305) et le décryptage de la clé de session cryptée sur la base de la clé de dispositif auditif ; ou dans lequel la détermination de la clé de session comprend le décryptage de la clé de session cryptée avec une clé globale.

7. Dispositif client selon l'une quelconque des revendications précédentes, dans lequel la génération de données de session (303) sur la base de la clé de session et des données de dispositif auditif comprend la génération d'un code d'authentification de message sur la base de la clé de session et des données de dispositif auditif.

8. Dispositif client selon l'une quelconque des revendications précédentes, dans lequel la génération de données de session sur la base de la clé de session et des données de dispositif auditif comprend la signature numérique des données de dispositif auditif.

9. Dispositif client selon l'une quelconque des revendications précédentes, dans lequel les données de dispositif auditif comprennent un micrologiciel, des données de réglage et ou des paramètres de fonctionnement de dispositif auditif.

10. Procédé, exécuté dans un dispositif client (110), pour une communication de dispositif auditif, le dispositif client (110) comprenant une unité de traitement (202), une unité de mémoire (203) et une interface (204), le procédé comprenant :
- l'envoi d'une demande de session (301) pour une session au dispositif auditif par l'intermédiaire de l'interface (204) ;
- la réception d'une réponse de session (302) par l'intermédiaire de l'interface (204) ;
- l'obtention d'une clé de session sur la base de la réponse de session (302), dans lequel l'obtention d'une clé de session comprend l'établissement d'une connexion à un dispositif de clé de session (111), l'envoi d'une demande de clé de session (304) au dispositif de clé de session (111), la réception d'une réponse de clé de session (305) du dispositif de clé de session (111) et la détermination de la clé de session sur la base de la réponse de clé de session (305) ;
- la détermination de données de dispositif auditif ;
- la génération de données de session (303) sur la base de la clé de session et des données de dispositif auditif ; et
- l'envoi des données de session (303) au dispositif auditif par l'intermédiaire de l'interface (204).

11. Procédé selon la revendication 10, dans lequel la réception d'une réponse de session (302) comprend la réception d'une clé de session cryptée, dans lequel la détermination de la clé de session comprend la récupération de la clé de session à partir de la réponse de clé de session (302).

12. Procédé selon l'une quelconque des revendication 10 à 11, dans lequel la détermination de la clé de session comprend la récupération d'une clé de dispositif auditif à partir de la réponse de clé de session (305) et le décryptage de la clé de session cryptée sur la base de la clé de dispositif auditif.

13. Procédé selon l'une quelconque des revendications 10 à 12, dans lequel la réception d'une réponse de session (302) comprend la réception d'une clé de session cryptée, et l'obtention d'une clé de session sur la base de la réponse de session (302) comprend le décryptage de la clé de session cryptée avec une clé globale.
